Europäisches Patentamt

European Patent Office

Office européen des brevets

(19)

(11) **EP 1 365 237 A1**

(12) **EUROPEAN PATENT APPLICATION**

(43) Date of publication:
26.11.2003 Bulletin 2003/48

(51) Int Cl.⁷: **G01N 30/00**

(21) Application number: 02447093.2

(22) Date of filing: 22.05.2002

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Universiteit Gent
9000 Gent (BE)**

(72) Inventor: **De Bisschop, Frank
9840 De Pinte (BE)**

(74) Representative: **Bird, William Edward et al
Bird Goen & Co.,
Klein Dalenstraat 42A
3020 Winksele (BE)**

(54) **Method and apparatus for evaluation of cell or particle adhesion**

(57)    A method and apparatus for qualitative or quantitative evaluation of an adhesion characteristic between at least one set of particles dispersed in a liquid and a stationary phase is described. The stationary phase is provided on an inner surface of a chamber, for instance on an inner wall or on the outer surface of beads in the chamber. The particles in the liquid are passed through the chamber at a flow rate so that adhesion between the stationary phase and the particles retards elution. A value relating to the retardation of elution is measured for the at least one set of particles as a measure of the adhesion characteristic. The method and apparatus may also be used for sorting particles such as cells.

Fig. 1

**EP 1 365 237 A1**

## Description

## Field of the Invention

The present invention relates to methods and apparatus for the characterisation of solid/liquid interfaces and their interaction with particles such as cells.

## Technical Background

Determination of the adhesion of particles to surfaces finds many applications. For example, a need exists in the evaluation of biopolymers, where the minimization of adhesion is an objective of specific interest, see "Biological evaluation of medical devices" - Part 4. ISO 10993-4 (1992), "A micro mechanical technique for monitoring cell-substrate adhesiveness: Measurements of the strength of red blood cell adhesion to glass and polymer test surfaces" V.M. Bowers, L.R. Fisher, G.W. Francis and K.L. Williams. J. Biomed. Mat. Res. 23, 1453 (1989), "Catheter sepsis due to staphylococcus epidermis during parenteral nutrition" A. Sitges-Serra, P. Puig, E. Janrietta, M.D Garau, A. Alastrue and A. Sitges-Creus, Surg. Gynecol. Obsstet. 151, pp. 481-483 (1980), "In vitro quantitative adherence of bacteria to intravascular catheters", N.K. Shet, H.D. Rose, T.R. Franson, F.L.A. Buckmire and P.G. Sohnie J. Surg. Res. 34, pp. 213-218 (1983).

The behaviour of particles in a flowing liquid has been investigated theoretically - Taylor G. "Dispersion of soluble matter in solvent flowing slowly through a tube", Proc Roy Soc London A 1953; 219:187-203; Golay M. J. E, Atwood J.G, "Early phases of the dispersion of a sample injected in Poiseuille flow", J. of Chromatogr. 1979;186:353-70.

The dispersion of a sample injected in convective cell or particle transport in the conditions of Poiseuille flow is subject to shear, gravitational settling and hydrodynamic lift, all of which appear interrelated. Constrictions of the flow path in the sampling valve do not affect the laminar flow character provided the Reynolds number is kept within certain ranges as shown by Ahmed SA, Giddens DP, in "Velocity measurements in steady flow through axisymmetric stenoses at moderate Reynolds numbers", J Biomechanics 1983;16(7): 505-16.

In the article by Cherukat P and McLaughlin B entitled "The inertial lift on a rigid sphere in a linear shear flow field near a flat wall", J. Fluid Mech 1994;263:1-18, the magnitude of lift in the linear shear zone was calculated, as occurs close to the capillary walls. On the basis of their findings, a physical model was formulated that describes the effects of lift and settling forces. The model predicts transition from fully developed Segré-Silberberg transport at high flow rates of the carrier liquid to transport conditions where wall contacts must be expected. The model teaches that at any given flow speed only cells or particles of well determined size/density ratios are able to translate near the wall, in the absence of resultant forces. Larger and/or more dense ones are expected to settle and contact the wall while smaller and/or less dense cells/particles will be pulled away from it, to end up in regions of much higher flow speeds. The paper does not deal with the problems of adhesion.

Basic problems, in fact, are the slow equilibration of adhesion processes, - see "Mechanics of particle adhesion", Rimai DS, DeMejo LP, Mittal KL, eds., Fundamentals of Adhesives and Interfaces. Utrecht:VSP; 1995. pp. 1-34, and their susceptibility to surface roughness - see Shaeffer DM, Carpenter M, Gady B, Reifenberger R, DeMejo LP, Rimai DS. "Surface roughness and its influence on particle adhesion, using atomic force techniques." in Rimai DS, DeMejo LP, Mittal KL, eds. Fundamentals of Adhesives and Interfaces. Utrecht:VSP;1995. pp. 35-48.

Although not directly related to the present invention, gas and liquid chromotography are usful techniques for comparison purposes. Both chromotographies relate to the determination of varied species in mixtures of gases or liquids or solids dissolved in liquids whereas the present invention relates to particles, cells, or other types of solid matter or discrete liquid matter which are dispersed in liquids. A suitable reference for the discussion of liquid and gas chromotaography is "A practical guide to Instrumental Analysis", Ernö Pungor, CRC Press, 1995.

Various industrial processes are known for separation of solids from liquids. Examples are flotation and sedimentation. In these processes gravimetric effects are used to separate the particles from the liquids. Generally, in these processes flow is a disadvantage.

There remains a requirement to provide apparatus and methods for the rapid and accurate assessment of interactions between particles such as cells and a solid/liquid interface, especially adhesive interactions.

There is also a requirement to provide apparatus and methods for the rapid and accurate assessment of solid/liquid interfaces, especially adhesive interactions with particles such as cells.

## Summary of the Invention

The present invention provides a qualitative or quantitative method of evaluating an adhesion characteristic between at least one set of particles in a liquid and a stationary phase, the stationary phase being provided on an inner surface of a chamber, comprising: passing the particles in the liquid through the chamber at a flow rate so that adhesion between the stationary phase and the particles retards elution, and measuring a value relating to the retardation of elution of the at least one set of particles as a measure of the adhesion characteristic. The stationary phase provides a solid/liquid interface in the chamber. The stationary phase is provided on an inner surface of the chamber, for instance, on an inner wall or on the outer surface of beads in the chamber. The flow in the chamber is preferably convective. The flow rate of passing liquid through the chamber is preferably lower than that required for Segré-Silberberg transport of the set of particles. On the other hand, the flow rate of passing liquid through the chamber is preferably higher than required to allow partial sedimentation in the chamber and rolling of the particles along the solid to liquid interface.

The present invention also provides a method of sorting one set of particles from another set of particles in a liquid using a stationary phase, the stationary phase being provided on an inner surface of a chamber, comprising: passing the particles in the liquid through the chamber at a flow rate so that adhesion between the stationary phase and the particles retards elution for at least one of the sets of particles, and selecting a sample of the particles depending on their degree of retardation. The flow rate of passing liquid through the chamber is preferably lower than that required for Segré-Silberberg transport of at least one of the sets of particles. The flow rate of passing liquid through the chamber is preferably higher than required to allow partial sedimentation in the chamber and rolling of at least one of the sets of particles along the solid to liquid interface. The stationary phase is provided on an inner surface of the chamber, for instance on an inner wall or on the outer surface of beads in the chamber.

The present invention also provides an apparatus for the qualitative or quantitative evaluation of an adhesion characteristic between at least one set of particles in a liquid and a stationary phase, comprising: a chamber with an inner surface having the stationary phase, a delivery device for supplying the particles in the liquid to the chamber at a flow rate so that adhesion between the stationary phase and the particles of the at least one set retards elution, and a measuring device for measuring a value relating to the retardation of elution as a measure of the adhesion characteristic.

The present invention also provides an apparatus for sorting one set of particles from another set of particles in a liquid using a stationary phase: a chamber with an inner surface having the stationary phase, passing the particles in the liquid through the chamber at a flow rate so that adhesion between the stationary phase and the particles of at least one of the sets retards elution, and means for selecting a sample of the particles depending on their degree of retardation.

The present invention will now be described with reference to the following drawings.

**Brief Description of the drawings**

Figure 1 shows an experimental set-up for the registration of the transport retardation of cells/particles in capillaries in accordance with an embodiment of the present invention.

Figure 2 shows an AC-operated gating suitable for use with the present invention. Variations of the gate impedance upon passage of any cells/particles generate burst LF-signals measurable across a sensing circuit such as a bridge.

Figure 3 shows signal detection schematically based on logarithmic demodulation/amplification. AD8307 : Log demodulator. LTC1560-1: active low-pass filter. VM1, AM1: bridge equilibration.

Figure 4 shows elution diagrams of 10 $\mu$m latex particles at different flow speeds ($U_m$) of the carrier liquid as carried out in accordance with an embodiment of the present invention. Capillary : 530 $\mu$m bore, methyl-coated and 5m in length.

Figure 5 shows travelled distance of the leading flank of elution peaks as a function of time and at various flow rates of the carrier liquid as carried out in accordance with an embodiment of the present invention. Sample: 10 $\mu$m latex particles. The column: methyl coated, 530 $\mu$m bore. Q: volume flow rate. $R^2$: correlation coefficient.

Figure 6 shows cumulative elution at different flow speeds ($U_m$) of the carrier liquid as carried out in accordance with an embodiment of the present invention. The column: methyl coated, 530 $\mu$m bore and 5 m in length. Sample material: 10 $\mu$m latex particles.

Figure 7 shows elution of 10 $\mu$m latex particles from capillaries with different wall coatings, measured at various flow speeds of the carrier liquid as carried out in accordance with the present invention. Capillaries: 530 $\mu$m bore, 5 m in length.

Figure 8 shows the effect of the integral cell/particle number on transport retardation as carried out in accordance with an embodiment of the present invention. Sample: 10 $\mu$m latex particles. Column : glycol coated, 530 $\mu$m bore.

Figure 9 shows forces implicated in the dynamic equilibrium in accordance with certain theoretical considerations which may be relevant to the present invention: Hydrodynamic lift ($F_L$), gravitational settling ($F_g$), Archimedes force ($F_A$) and shear ($F_s$).

Figure 10 shows the magnitude of lift as a function of slip velocity (Us), according to Cox and Cherukat.

**Detailed Description of the illustrative embodiments**

The present invention will be described with reference to certain embodiments and drawings but these are provided as examples of the invention only and the skilled persons will appreciate that many other implementations of the present invention are included within the scope of the attached claims.

The present invention may provide in one aspect an apparatus and an instrumental method for quantitative and/or qualitative evaluation of cell or particle adhesion to interfaces especially to solid-liquid interfaces. The present invention may also provide in another aspect an apparatus and an instrumental method for quantitative or qualitative evaluation of solid-liquid interfaces especially by their adhesive interaction with cells or particles. In one aspect of the present invention, an apparatus and a method are described which provide a measure of adhesion determined from a characteristic of the retardation of convective cell or particle transport as measured in a chamber. The chamber may be a generally elongate hollow structure such as a capillary tube or a column. Generally, the column will have a liquid inlet and a liquid outlet. The chamber may have a uniform cross-section along its length and this is generally preferred. The chamber may also be filled with objects, e. g. beads or chunks of solid material. The characteristic may be directly or indirectly related to the retardation. Within the chamber there is an internal surface portion which is coated with the material under investigation. The portion which is coated preferably on the walls of the chamber but can also be a coated portion on structures such as beads which are located within the chamber. The retardation may be measured with respect to a reference material or arrangement. The cells or particles are preferably in the form of a dispersion, e.g. a suspension or an emulsion, in a carrier liquid and are passed through the chamber, e.g. through a capillary, in conditions of controlled flow. The controlled flow is preferably convective flow. An emulsion may be defined as a dispersion of non-soluble liquid in another. A suspension may be defined as a dispersion of solid particles in a liquid. Further, the dispersion is preferably not subject to significant sedimentation or floatation during the time of one test, i.e. gravimetric separation preferably does not occur.

It is generally preferred if the concentration of particles in the liquid remains constant during a test, that is that the flow is isocratic (= equal strength) during the test. The particles may be any form of solid or liquid matter which has a clearly defined separation from the liquid and has some form of distinguishable and more than transient existence in the carrier liquid. The particles do not have to be rigid - they may be deformable and when cell-liquid/solid interfaces are being examined they will normally be deformable. Cells comprise large quantities of water and the particles need not be solid but can comprise liquids. The cells may be any type of cells, e.g. eukaryotic or prokaryotic cells. In particular, cells from the human or animal body may be suitable such as red or white blood corpuscles. Also the particles may be other structures such as micelles or liposomes which form discretely identifiable bodies in a liquid even if these bodies are liquid or mainly liquid. The present invention does not excludes the testing of diffuse solid bodies such as obtained by flocculation.

In accordance with an aspect of the present invention delayed elution at specific flow rates of the carrier liquid has been shown to reflect adhesive interaction of the cells or particles with a coated surface, e.g. with the coated chamber walls or with coated objects within the chamber. This delayed elution may be used for qualitative or quantitative comparison purposes, e.g. as compared with a reference substance. Various parameters may be used to characterise particle interactions with solid/liquid interfaces. First of all the delay in eluting particles may be taken as a measure of the adhesion between the particles and the solid/liquid interface. The delay may be an absolute delay or may be relative, e.g. relative to a standard. In order to compare with a standard one or more calibration graphs may be prepared, e. g. a standard particle/solid/liquid combination may be used to prepare calibration graphs of retardation time versus flow rate, retardation time versus particle concentration, etc. Multi-dimensional calibration graphs may also be prepared, e.g. a calibration graph relating flow rate:particle concentration:retardation time or a calibration graph relating flow rate:particle concentration: retardation time:temperature.

More complex parameters may be used as the characteristic of particle - liquid/solid interface adhesive interactions. For instance, based on a suitable theory (see below) retardation values may be converted into an adhesive coefficient or other similar parameter. Other parameters may be derived from simple time retardation measurements, e.g. the number of particles retained in the chamber by the adhesive effects during the time of retardation; the volume of liquid eluted within the time of retardation, etc.

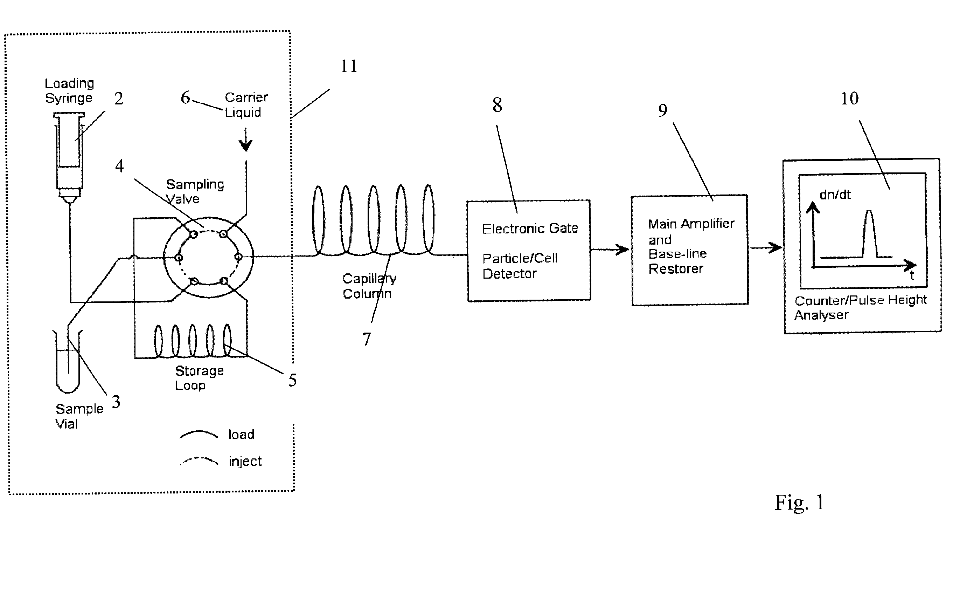

Fig. 1 shows a measurement arrangement 1 in accordance with an embodiment of the present invention. Arrangement 1 comprises a delivery device 11 for delivering cells or particles in a suitable fluid. For instance, the delivery device 11 may comprise a loading syringe 2 for introducing, e.g. by gravity feeding or injecting, a liquid containing particles or cells in suspension. A storage device 5 may be provided to allow storage of a certain quantity of liquid containing particles, e. g. sufficient for an experiment. A further inlet 3 may be provided for introducing, e.g. gravity feeding or injecting, a sample or further sample to be tested (e.g. for suction by the syringe 2 out of a vial for storing in the storage loop 5). One of the syringe 2 and the inlet 3 may be used to introduce a standard particle/liquid mixture for comparison or calibration. A second syringe may be attached to inlet 3. Further, a supply 6 of carrier liquid is provided. Optionally, a sample valve 4 is provided which is a convenient way of connecting a measurement chamber 7 such as a capillary column to a variety of inputs, e.g. the syringe 2, the storage loop 5, the inlet 3 or the carrier liquid supply 6.

The transport and separation processes in the chamber 7 can be highly dependent on the viscosity and density of the carrier liquid. Carrier liquids suitable for cell transport and having a wide range of densities and viscosities can be obtained by dissolving small amounts of povidone (polyvinylpyrrolidone, Sigma Pharm.),

methylcellulose or percoll (Amersham Bioscience, Gibco, Invitrogen) in isotonic saline (0.9 % NaCl in $H_2O$). Isotonic carrier liquids are preferred for non-destructive measurements of cell transport.

Neither the viscosity of the carrier nor the length or bore of a capillary column create any problems with respect to the control of carrier flow. Commercial HPLC pumps (high pressure liquid chromatography) are suitable for pumping the carrier liquid.

Temperature effects on the viscosity of carrier liquids may have a marked impact on transport retardation and adhesion and is preferably controlled. An increased cell or particle retardation may be associated with increasing temperature.

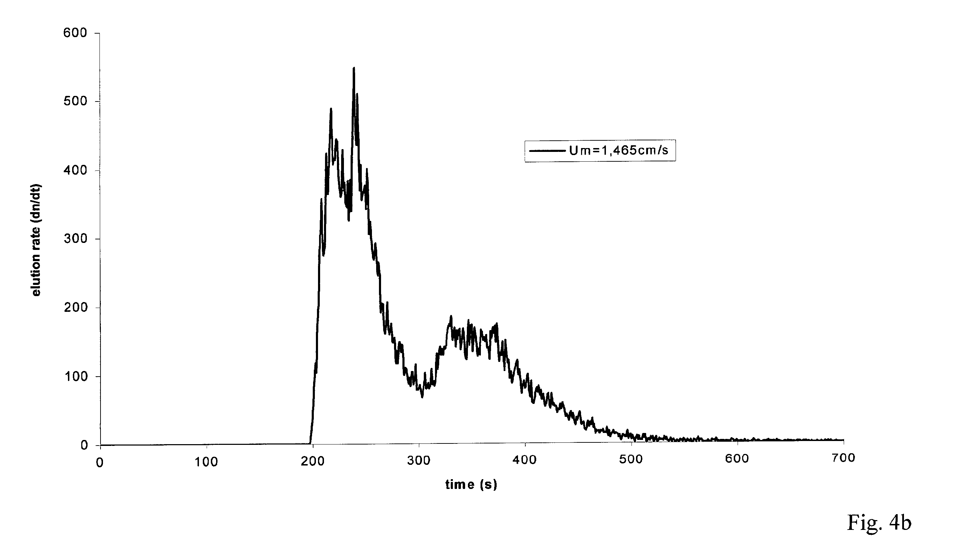

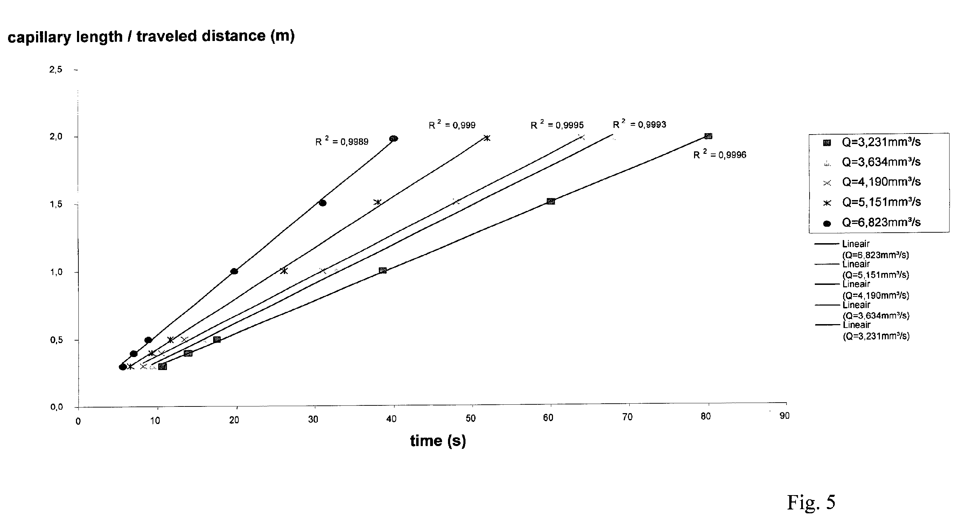

Chamber 7 is hollow and may be generally elongate, for example a capillary tube, and enclose a volume (rather than being an open tray), e.g. it can be cylindrical. The elongate chamber should have a length sufficient to retard the particles or cells so that different elluent peaks can be distinguished in time as is discussed below with reference to Figs. 4b and 5.

A suitable cell or particle detector such as an electronic gate detector 8 is located at the outlet of the measurement chamber 7 and monitors the elution of particles from the chamber 7 by measuring the passage of individual cells or particles from the chamber 7. Two basic methods are known to count particles such as cells - aperture- impedance counters and optical counters. The first type of counter includes devices such as those supplied by Coulter, Hialeah, FL, Baxter Diagnostics, Waukegan, IL (Sysmex) and Abbott Diagnostics, Santa Clara, CA (Cell-Dyn). Cells are counted by measuring the change in electrical impedance as a cell passes through an orifice. As the cells are in the orifice there is a momentary drop in conductance and this is registered as an electrical pulse. The second type of counter depends on light scattering properties of the particles. Examples of such devices are supplied by Bayer Diagnostics, Kent, WA (the Technicon series) and Abbott Diagnostics, Santa Clara, CA (Cell-Dyn). In these devices the particles pass through a narrowly focussed beam of light, usually a laser light. The particles interrupt or alter the light beam thereby generating an electrical pulse from suitably arranged photovoltaic sensors. Any such detectors as mentioned above may find advantageous use with the invention.

Generally, the detector 8 transposes the passage of individual cells or particles into recognisable signals, e.g. electrical pulsed signals. The output of the detector 8 may be fed to an amplifier and base line restorer 9. The output of 9 may be supplied to a counter and pulse height analyser 10 for measuring the pulse rate and height. The pulse rate is a measure of the cell or particle elution rate. It is preferred if the detector 8 does not affect the flow pattern in the column 7 significantly. AC-gate detectors of axial symmetry and operating at working frequencies in the (low frequency) LF-domain as described in the article by De Bisschop FR, Vandewege J, Li W, De Mets M., "Low frequency electronic gate technique for the counting and sizing of cells, bacteria and colloidal particles in liquids", Proc. 18th IEEE IMTC Conf Budapest 2001:1309-13, may be found suitable for use as detector 8. However, other cell or particle detectors may be used. For example, optical detectors can be used where appropriate for the particular particles or cells.

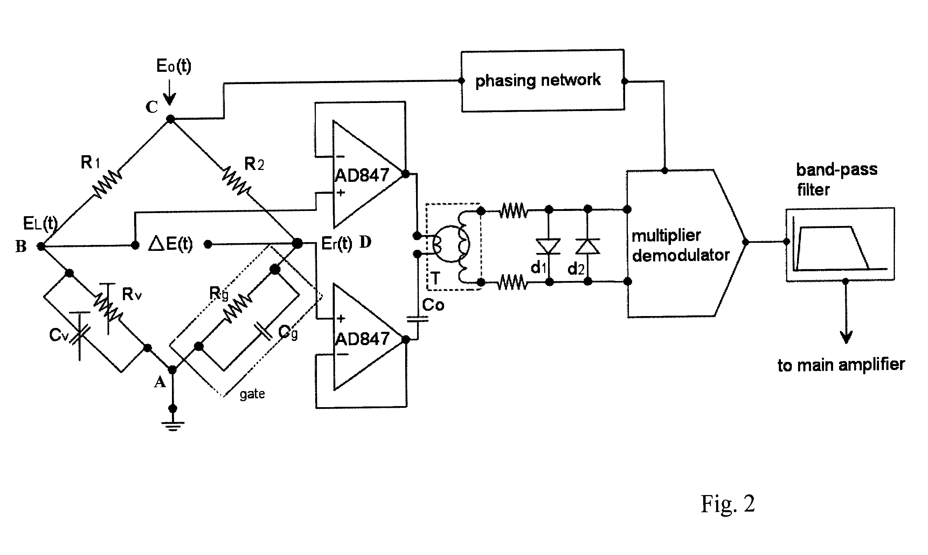

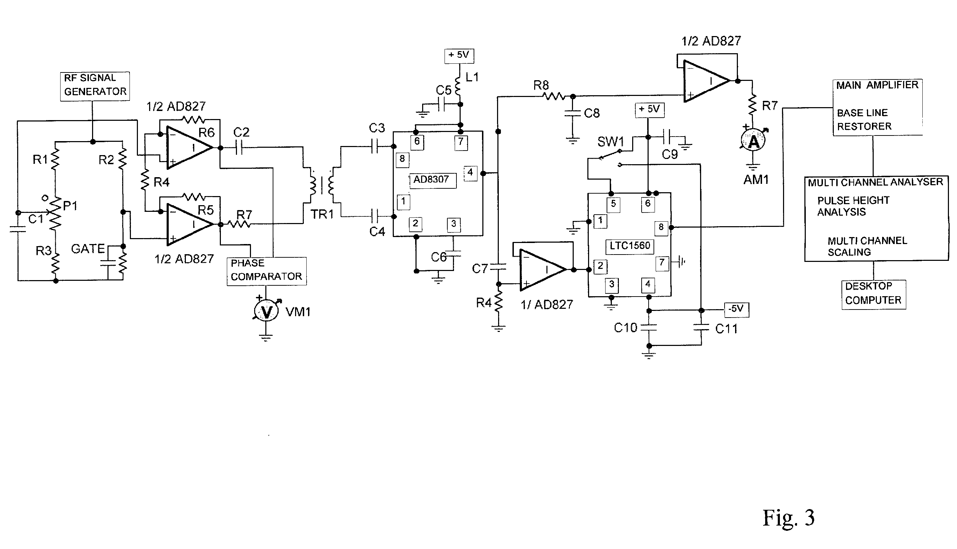

For example, an AC-gating detector may be implemented as follows. A diluted sample, consisting of a conductive carrier liquid and cells or particles to be measured, is introduced into a device containing a gate, and flows towards the gate. Electrodes are provided on either side of the gate. Preferably, these electrodes are platinum electrodes. These electrodes are electrically interconnected to either side of a low frequency AC signal generator (best shown in Fig. 3), having a frequency below 1 MHz, whereby DC is excluded. The frequency is preferably in the range 100 kHz to 1MHz, more preferably in the range 100 to 600 kHz for measurements on cells, most preferably in the range 200 to 600 kHz. In the following the words "low frequency" represent a voltage in any of these ranges. This current source sends current through the gate via the conductive carrier liquid. Two signal sensing electrodes are applied, before and after the gate (with before and after seen in function of the direction of flow of the carrier liquid), which measure the current going through the gate. One of these signal sensing electrodes is grounded, the other one is connected with a bridge, the signal sensing electrodes forming the nodes A and D of the bridge respectively (see Fig. 2). In order not to have any current leaking to the earth through the carrier liquid, and thus in order to eliminate external influences, guard electrodes may be introduced. Both guard electrodes are kept on the same potential as the second signal sensing electrode by means of a voltage follower. Signal recovery in ac-operated gating may be based on phase-sensitive AM-demodulation as shown schematically in Fig. 2, the bridge actuating signal serving as a reference. The kind of modulation however that takes place in the bridge does not exactly respond to a multiplication of signals required for proper AM-modulation. The dynamic range of the modulation/demodulation, suffering from such limitations, seldom exceeds 28 dB.

The circuit of Fig. 2 may be described as an active cell with a gate (GATE, $R_g$ $C_g$) and a device matched in impedance to the active cell ($C_v$ and $R_v$), the AC signal ($E_0(t)$) from the signal generator being applied to both the cell and the matched device in parallel to generate a non-resonant electrical signal at the output of the active cell and the matched impedance device. The detector of Fig. 2 comprises an AC bridge which measures each particle transition through the gate as a variation of resistive and reactive impedance of the gate. Voltage division, by the bridge, converts such variations into amplitude- and phase modulation of the LF carrier signal applied. The gate forming part of the AC-bridge between nodes A and D, appears to function as a capacitor bypassed signal source, with equivalent source resistance $R_e = (R_g.R2)(R_g + R2)$ and equivalent load capacitance $C_e = C_g + C_w + C_i$, where $C_g$ represents the intrinsic gate capacitance, $C_w$ represents the wiring capacitance and $C_I$ represents the preamplifier input capacitance.

The elements ($C_v$ and $R_v$) of the bridge are adjusted such that, when only carrier liquid is passing through the gate, the bridge is in equilibrium, and no current is going from node B to node D. More particularly, $R_1$, $R_2$, and $R_v$, are preferably equal to the gate resistance $R_g$, in order to have optimum sensitivity. For example $R_v$ might be a 10 kΩ potentiometer and $C_v$ a 25 pF variable capacitor, in order to adjust the bridge to equilibrium. Cg is the gate capacitance.

When a cell or particle passes through the gate, the bridge is out of equilibrium, and a voltage $\Delta E$ (t) is measured between node B (voltage $E_L(t)$) and node D (voltage $E_r(t)$). When the bridge is balanced, the signals at nodes B and D are equal. Both signals are led to a differential amplifier (AD847). With $E_L(t)$ and $E_r(t)$ being in phase, the bridge trimmed to equilibrium operates with almost disappearance of the LF carrier signal. Demodulation, however, is preferably not done at this stage since a true difference signal, at the occurring frequencies, is not readily available. An embodiment of the present invention includes the use of a differential preamplifier comprising signal followers (e.g. operational amplifiers) to drive a broadband torroidal transformer T so that the difference signal only is passed to a demodulator (multiplier demodulator). For example two operational amplifiers AD847 supplied by Analog Devices may be used. The transformer T acts as a common mode rejection device. The output signal from each operational amplifier is fed back to its inverting input. The voltage gain is unitary but the power and current gain is appreciable which is necessary to drive the torroidal transformer T. The followers have a high input impedance which reduces the load in the bridge.

Diodes $d_1$ and $d_2$ (such as IN914 or IN4148) protect the demodulator input in the common cases of clogging. Demodulation in the demodulator may be performed, preferably, by synchronous multiplication with the bridge input signal $E_0(t)$ supplied from node C as a reference, followed by band-pass filtering and final amplification.

The dynamic range problem of the circuit of Fig. 2 can be eliminated by the use of a logarithmic demodulator amplifier specifically developed for the handling of pulsed RF signals. Demodulators of this type detect the envelope of burst RF signals which is of particular interest for the present purposes. The dynamic range of log demodulators such as the AD606, AD640 or AD8307, in the order of 60 dB or better, in practice remains limited by the noise level of the gate. The latter responds to a 1/f frequency dependence. The effect of cell "transparency" at working frequencies much higher than 800 kHz degrades the detection sensitivity. Optimal working frequencies for such reasons remain situated in the LF-domain for cells, e.g. from 200 to 600 kHz. As in the detector of Fig. 2, the gate (GATE) is incorporated in an AC bridge in the circuit of Fig. 3. The detector detects particle transition through the gate as a variation of the gate's resistive and reactive impedance. The elements ($R_3$ $C_1$) of the bridge are adjusted such that, when only carrier liquid is passing through the gate, the bridge is in equilibrium.

Both signals from the bridge are fed to a differential preamplifier, e.g. comprising operational amplifiers AD827 supplied by Analog Devices. The differential preamplifier drives a broadband torroidal transformer TR1 so that only the difference signal is passed to a logarithmic demodulator (AD8307). The transformer TR1 acts as a common mode rejection device. The output signal from each operational amplifier is fed back to its inverting input, for example over a resistance R5, resp. R6 of e.g. 1 kΩ.

The output signal of the torroidal transformer TR1 is demodulated by the logarithmic demodulator such as an AD8307 supplied by Analog Devices. The use of such a logarithmic demodulator shows improved functional stability, simplicity of operation and reduced costs over the use of a phase sensitive demodulator as described in the first embodiment of the present invention.

Logarithmic demodulation, which is phase-insensitive, needs neither a reference signal (from the RF signal generator) nor compensation for the phase-lag introduced by the differential preamplifier, so that the circuit is greatly simplified. The circuit, furthermore, demands no tuning. Logarithmic signal detection, contrary to phase-sensitive demodulation, is essentially broadband. The frequency response of the preamplifier and demodulator is substantially flat within the range from 200 kHz to 20 MHz. Logarithmic detection, as such, offers access to the range of working frequencies. This demodulator allows determination of the frequency dependence of cell impedance, within that range. This is a point of actual interest, specifically in the field of biotechnology. It also allows optimum setting of the frequency dependent upon the type of cells or particles used.

Coupling of the differential preamplifier to the logarithmic demodulator requires matching of input/output impedances and blocking of dc offset voltages that might be present in the preamplifiers' output signal. This is carried out by capacitors $C_3$, $C_4$. The capacitance of $C_3$, $C_4$ should be high enough to avoid oscillation. The output of the demodulator is fed to a low-pass filter (LTC1560) required for the elimination of any residual ripple that might be present on the demodulated gate signal. The output from the filter is supplied to a main amplifier and from there, for example, to a multichannel analyser and desk top computer.

The equilibration of the measuring bridge is greatly simplified by direct reading of the magnitude of the difference signal ΔE(t) across the bridge. For example a phase comparator (see Fig. 3) may be used to bring the measurement signals across the bridge in phase, e.g. while adjusting the capacitance $C_1$. The phase difference is visualised by a meter VM1. The amplitude of the bridge output signals (after proper phasing) is equalised by potentiometer P1. This is visualised by the meter AM1 which takes on an extreme value when equality is reached. The use of panel meters such as AM1 and VM1 is more preferable than using an oscilloscope. The panel meters also indicate any clogging of the gate, even partial, or a changing conductivity of the carrier liquid as a consequence e.g. of a changing room temperature, because any of these events will put the bridge out of equilibrium.

The circuits of Fig. 2 and Fig. 3 are described in detail in European Patent application EP 1162449 and International Patent Application, WO01/94914, respectively, both of which are incorporated herewith in by reference in their entirety. In particular it will be appreciated that the circuits of Fig. 2 and 3 provide a detection method for detecting objects in a liquid such as colloidal particles, cells, or the like, comprising the following steps: applying an AC signal in parallel to an active cell with a gate and a device matched in impedance to the active cell, this AC signal generating a non-resonant electrical signal at an output of the active cell as well as at an output of the matched impedance device, sending at least one object to be measured through the gate of the active cell, this causing an electrical measurement pulse across the output of the active cell, modulating the non-resonant AC electrical signal at the output of the active cell, with the electrical measurement pulse, feeding the outputs from the cell and the matched impedance device to an AC common mode rejection device, thus generating a difference signal modulated with the non-resonant AC signal, demodulating the difference signal from the common mode rejection device, and filtering the demodulated signal to remove components of the AC signal and its harmonics to retrieve a signal relating to the volume of an object passing through the gate of the active cell. The signal generator may provide a signal with a frequency in the range 100 kHz to 1MHz, more particularly in the range 100 to 600 kHz. The common mode rejection device may be a Wheatstone bridge. Also a detection device for detecting an object in a liquid such as colloidal particles or cells is provided, comprising: an AC signal generator for generating an AC signal; an active cell with a gate and a device matched in impedance to the active cell, the AC signal from the signal generator being applied to both cells in parallel to generate a non-resonant electrical signal at the output of the active cell and the matched impedance device; a modulator for modulating the signal applied to the active cell with a measurement pulse generated when an object passes through the gate of the active cell, an AC common mode rejection device, to which the outputs from the active cell and the matched impedance device are fed, generating a difference signal; a demodulator for demodulating the difference signal; and a filter for filtering the demodulated signal to remove components of the AC signal and its harmonics to retrieve a signal relating to the volume of an object passing through the gate of the active cell. The AC signal generator may generate a frequency between 100 kHz and 1 MHz, more preferably in the range 100 to 600 kHz, especially when detecting cells. The matched impedance device may comprise resistors and/or capacitors. The AC common mode rejection device may be a Wheatstone bridge. The common mode rejection device may be a differential amplifier. The demodulator is preferably a logarithmic demodulator.

Log demodulators, full-wave rectifiers, do not suffer from feed-through of the carrier signal. Feed-through is problematic in phase-sensitive demodulation due to the proximity of the carrier frequency to the signal pass-band. Log. Demodulation has the advantage that it does not require very specific filters. Any residual RF ripple present in the demodulated signal is at the double of the carrier frequency or higher. The increased frequency distance between noise and the wanted signal makes filtering less critical.

Log demodulation/amplification also increases the counting accuracy which is limited by so-called dead time in A/D conversion, e.g. in the counter and pulse-height analyser 10, specifically at high elution rates. Dead time is markedly reduced by the logarithmic scaling of signals, because of the reduction in converted address numbers to which dead-time is proportional. Cell/particle sizing is done on the basis of pulse-height measurement, e.g. by a pulse height analyser - see Fig. 2 and 3. The size axis however, linear in the logarithm of the cell/particle sizes, is related to a much larger range of values.

For adequate functioning of such detectors, carrier liquids of a well determined and stable electrical conductivity are preferred. The gate resistance should be kept as low as possible for reasons of signal-to-noise ratio and detection sensitivity. The resistivity of carrier liquids and diluents appears very susceptible to $P_H$. The use of $P_H$ buffering is advised therefore, but not strictly necessary. The buffering capacity doesn't need to be high.

If conductive liquids cannot be used, other types of detectors can be used. Alternative particle or cell detection methods include radioactive labelling of the cells or particles and then detection of the radiation, the use of fluorescing particle counters, the use of colorimetric detectors. All these methods are suited for the monitoring of cell or particle elution. However, the detection sensitivity of the above detection methods is lower, commonly, than that of electronic gating. An exception is a photo-multiplier based system applied in cell sorters, the sensitivity of which can be almost the same as that of electronic gating, see for example, "The art of Electronics, Horowitz and Hill, pages 599-600, Cambridge Press, London, 1980 .

Most of the above detection systems are of the integrating type, that is to say: the detectors do not signal the passage of single cells or particles. The relationship furthermore between the cell or particle size and the amplitude of the detection signal is not well defined. The above techniques may be used therefore in counting experiments. The present invention is not limited to integrating detectors or those capable of detecting individual particles.

When the apparatus is to be used for cell sorting, a means should be provided (not shown) for selecting a specific fraction of the cells in dependence upon their retardation.

When a charge of particles or cells is injected into the chamber 7 along with a carrier liquid, the cell or particle elution appears retarded with respect to that calculated on the basis of physical models for the transport of solutes. This retardation is not dependent upon the adhesion of the cells or particles to the chamber wall and marks the absence of transport near the capillary axis, a phenomenon known as the Segré-Silberberg effect. In Segré-Silberberg flow transport takes place predominantly at a lateral distance about halfway between the axis and the capillary wall - see Segré G, Silberberg A., "Behaviour of macroscopic rigid spheres in Poiseuille flow" (Parts 1 and 2), J. of Fluid Mech 1962; 14: 115-35 and 136-56; Feng J, HU HH, Joseph DD, "Direct simulation of initial value problems for the motion of solid bodies in Newtonian fluid, Part 2, Couette and Poiseuille flows.", J. Fluid Mech 1994; 227:271-301; and Schönberg JA, Hinch EJ., "Inertial migration of a sphere in Poiseuille flow", J. Fluid Mech 1989; 203:517-24.

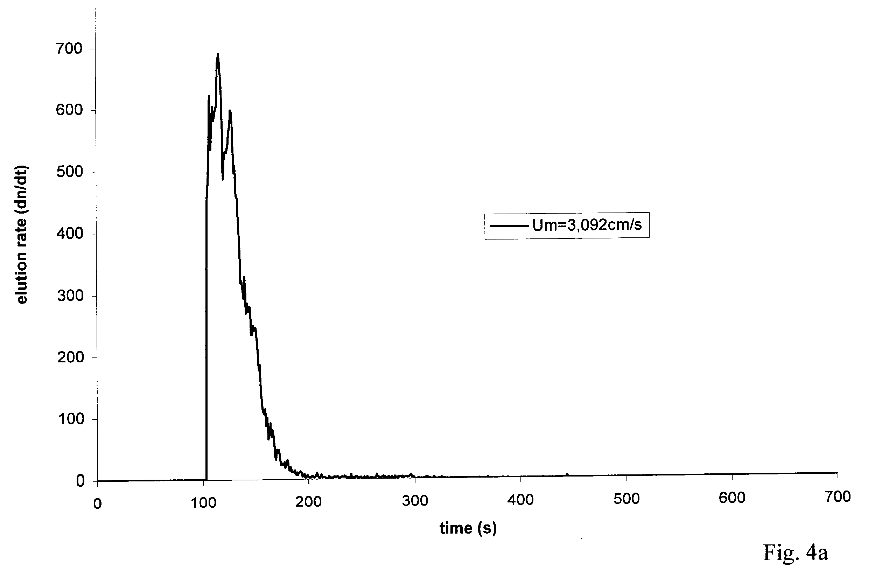

The occurrence of Segré-Silberberg transport explains why elution diagrams show a sharp and delayed leading flank as shown in Fig. 4a, and why tailing is absent, at least at relatively high flow rates of the carrier liquid. The phenomenon, plainly developed in vertical flow tubes, appears disturbed in horizontal ones by effects of settling and adhesion. On decreasing the carrier flow speed elution peaks become more and more distorted and eventually split up into two (or more) as shown in Fig. 4b.

The doublet of Fig. 4b may be attributed (without being limited to theory) to sample fractions that behave in different ways: a first one that moves at a radial distance about halfway the axis and the wall (that is with Segré-Silberberg transport) and a second one that moves close to the wall, prone to (and delayed by) adhesion. Fig. 4b may be referred to as a "chromatogram". In accordance with an aspect of the present invention, a flow rate is used in the measurement chamber which is lower than the rate for Segré-Silberberg transport of at least one set of particles in the liquid/particle mixture in that chamber. However, the flow rate should be higher than that required to allow gravitational separation of the same set of particles, e.g. higher than the rate for partial sedimentation and rolling of the particles along the solid/liquid interface.

It has been found that the retardation of the second fraction shown in Fig. 4b effectively depends on cell or particle sizes and densities and, most importantly, on the chemical nature of the coatings on the wall of the chamber. The present invention makes use of this retardation of the second peak to sort cells or particles or to determine a characteristic relating to the interaction between the cells or particles and a solid/liquid interface within the chamber 7.

Analysis of results or optimisation of practicable particle sizes, viscosities/densities of carrier liquids and Reynolds numbers, may be based on an approximate transport model that describes the motion of cells or particles on column, in translation near the wall. This model is presented for capillary tubes for simplicity's sake.

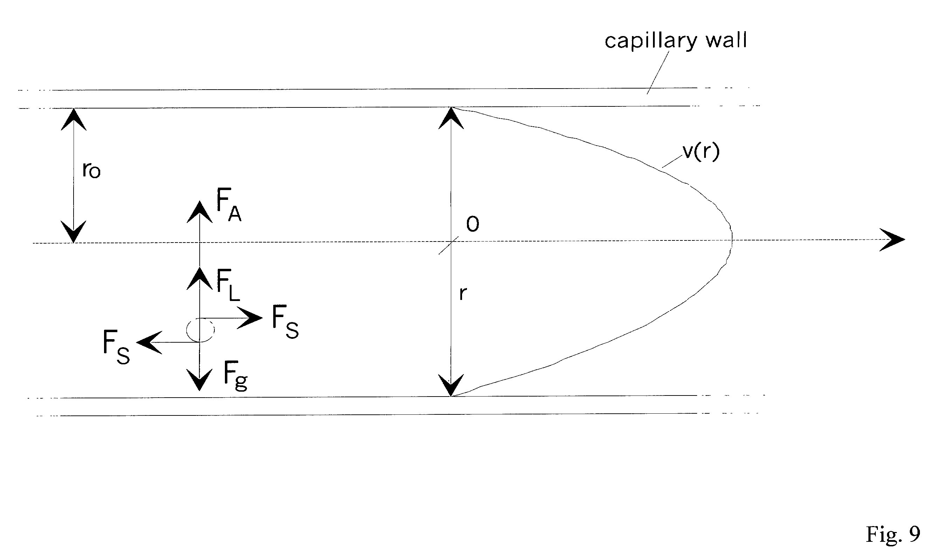

According to Cherukat and McLaughlin the magnitude of lift in linear shear near the wall corresponds to (see Fig. 9)

$$F_L = a\mu VR_e I \qquad \text{(eq.1)}$$

where a : the cell/particle radius

μ: dynamic viscosity
V: a characteristic velocity of the carrier liquid
$R_e$: Reynolds number
I: dimensionless number, numerical outcome of an integral

The quantity I, according to Cherukat and McLaughlin and to Cox (see "The lateral migration of solid particles in a laminar flow near a plane", R.G. Cox and S.K. Hsu, Intl. J. Multiphase Flow 3, 201-222 (1977)), should be close to 1.8, at least in circumstances where cell or particle slip is absent. This obviously is no longer the case when cell or particle motion is retarded due to adhesion and the model has to be amended. The quantity I in such cases increases markedly. The slip (velocity) $U_s$ of the cell/particle with respect to the surrounding liquid, is defined here as

$$U_s = V_{cell} - GL \qquad \text{(eq.2)}$$

where L stands for the distance of the cell/particle to the wall, and G for the velocity gradient. The latter, in the present case of Poiseuille flow can be represented by:

$$G = 2v_o \frac{r}{r_0{}^2} \qquad \text{(eq.3)}$$

where $v_o$: axial speed, $r_0$: capillary radius, r : distance to the axis. Near the wall, i.e. at a distance $r = r_o$ - a from the axis, the gradient G is seen to take on an almost constant value, close to $2v_o/r_o$. The characteristic velocity V of the carrier, in the present case of linear shear near the wall corresponds to

$$V = G\,a \qquad (eq.4)$$

The Reynolds number Re is defined here as

$$R_e = \frac{Ga^2}{v} \qquad (eq.5)$$

where $v$ : cinematic viscosity, i.e. $v = \frac{\mu}{\rho L}$, $\rho_L$ standing for the density of the carrier liquid.

As a result, the magnitude of lift in the absence of slip is formulated as

$$F_L = \frac{4a^4v_0^4}{r_0^2}\rho_L l \qquad (eq.6)$$

Lift, acting in a radial direction, is seen to add-up with the gravitational force above the axis while countering it below, at least for cells or particles that settle in the carrier at rest. Conditions of cancelling lift, settling and Archimedes forces are expected to occur when:

$$\frac{4a^4v_0^4}{r_0^2}\rho_L l \approx \frac{4}{3}\pi a^3(\rho_P - \rho_L) \qquad (eq.7)$$

where $\rho_p$ represents the particle/cell density.

It should be noticed that eq. 7 is to be considered as an approximation, since Archimedes' law doesn't strictly hold in non-static fluids. Nevertheless, the r.h.s of eq. 7 is found to produce the right order of magnitude, in most cases. Taking into consideration the fact that a « $r_o$ in many cases, it is seen that eq. 7 can be simplified and rearranged to read

$$a \approx \frac{10{,}27\,r_0^2}{v_0^2}\left(\frac{\rho_P}{\rho_L}-1\right) \qquad (eq.8)$$

or, alternately

$$v_0 = \left[\frac{10{,}27\,r_0^2}{al}\left(\frac{\rho_P}{\rho_L}-1\right)\right]^{1/2} \qquad (eq.9)$$

At any flow speed $v_o$ of the carrier, only cells or particles of a well determined density/size ratio will satisfy eq. 9 and translate near the capillary wall in the absence of resultant forces.

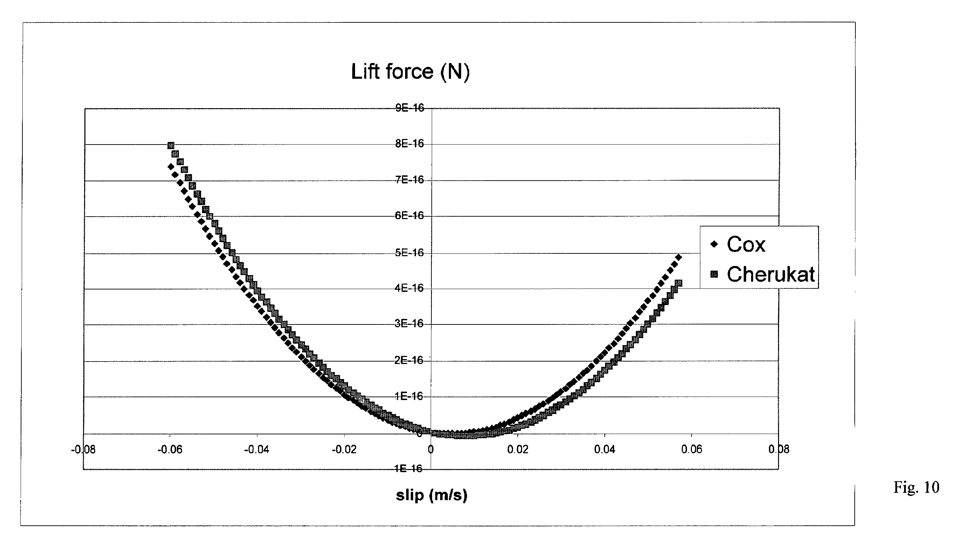

When adhesion comes into play, cell or particle translation and rotation slow down, giving rise to negative slip velocities with respect to the surrounding carrier liquid. The Cherukat-McLaughlin model in such circumstances predicts increasing lift. Viscous drag is animated also. Cells or particles in such conditions presumably can be involved in repeated adhesion-and-release processes. The times needed for the build-up of lift and drag, sufficient for release, are expected to be in proportion with the strength of the adhesive interaction. More dense cells or particles will settle and contact the wall, unless the capillary radius $r_o$ is decreased or a carrier liquid of higher density is adopted, so that the ratio $\rho_p/\rho_L$ is kept constant. Less dense cells/particles that do not satisfy eq. 9 will be pulled away from the wall to end up in regions of much higher flow speed. On decreasing the carrier flow speed, adhesion comes into play so that the cell/particle translation and rotation slow down. Slip obviously isn't zero any longer and magnitude of lift increases - see Fig. 10.

Increasing lift and drag very well may cause the release of adhering cells or particles. The latter can be involved, as such, in repeated adhesion-and-release processes or in a hopping-like motion. Cells or particles that almost exactly meet equations 8 and 9 are expected to be involved in such processes as a consequence of the short-range adhesion force, superimposed on settling force.

The validity of equations. 8 and 9 has been confirmed by experiments with latex particles, having a known particle size (10 μm) and density (1038 kg/m$^3$). The capillaries were of 530 μm and 220 μm bore. Physiologic saline (0.9 % NaCl in water) was used as carrier liquid. Its density at 24 °C was 1024 kg/m3. The carrier speeds, in full agreement with eq. 9, where close to 3 cm/s.

For the sake of completeness, it should be mentioned that rolling of particles (over the capillary wall) was never observed as a representative type of motion: the elution would be much more retarded in that case, than experimentally observed.

Cell or particle and flow parameters can be optimised, amended or changed to meet the equations 7, 8 and 9, and to obtain the balance of forces that is at the basis of the present transport model.

It should be mentioned that apparent noise in elution diagrams like that shown in Fig. 4 is not necessarily of electrical origin: it can reflect statistical variations in the count rate due to the limited number of cells or particles present in the sample.

An application of the present technique is the relative measurement of cell or particle adhesion. The proposed technique provides accurate and highly reproducible information about the extent of adhesion in real-world situations, so as encountered in medical devices (artificial organs, catheters, membranes). The present technique aside elution diagrams also allows cell or particle size distributions to be determined, with high accuracy. Cell or particle size distributions of column effluents measured at regular time intervals confirm the separation of sample fractions, on the column, on the basis of cell or particle sizes and densities, as predicted by the transport model.

One embodiment of the present invention relates to quantitative evaluation of cell or particle adhesion upon convective transport in a chamber such as a capillary tube. The objective is to measure the transport retardation due to adhesion, and its relation to the chemical nature of coatings in the chamber, e.g. of capillary wall coatings. Cells or particles in suspension in a carrier liquid (e.g. physiological saline solution) are passed through the chamber 7 such as a capillary several meters in length. On the inside of the chamber 7 an internal coating is applied whose adhesive properties are to be measured. Such a coating may be made of a chemical compound having methyl, methyl-phenyl or glycol groups, for example. For instance, the superficial -OH groups of a fused silica capillary column are modified to form active groups, e.g. methyl-, phenyl, or glycol-groups. The layer thickness is negligible with respect to the capillary bore. Other coatings may be obtained by any suitable deposition technique, e.g. evaporation from solution, vapour deposition from a gas. The thickness of such coatings may not be negligible and should be taken into account, e.g. when calculating flow speed (see eq. 9) and when comparing different materials. The adherence of these coatings is expected to be differ from each other. A co-axial gate detector 8 inserted at the chamber outlet monitors the elution and translates the passage of individual cells or particles into electrical pulsed signals. The pulse rate measured reflects the elution rate. Calibration tests for reproducibility reasons may be done with synthetic particles such as latex particles, having a known and uniform density and size distribution. Gates used in these experiments for reasons of detection sensitivity may have an aperture of about 50 $\mu$m, for example. If a capillary tube is used for the measurement chamber 7, this can have a bore of 530 $\mu$m, similar to a commercial type used in chromatography. Such a combination allows a perfect match of gate transition times and capillary flow rates. The inside of the capillary is coated with the material to be tested. Gate transition times in the order of 10 to 20 $\mu$s ensure optimal signal-to-noise ratios of the detection system. Flow rates in the range of 1 to 7 mm$^3$/sec allow the transition to be observed from fully developed Segré-Silberberg transport, where adhesion effects are absent, to transport regimes in which adhesion induced retardation is present. The flow path inside the sampling valve for the present purposes should preferably be metal free.

Of importance for the applicability of the technique is the rate of establishment of Segré-Silberberg transport as soon as possible after injection of the sample. The sample is presumed to move as a plug, at that moment of injection. Samples in the present experiments of horizontal flow usually contain thousands of cells or particles, or even more. The rate of transition from a distribution like that to Segré-Silberberg transport remains largely unknown. Relevant information can be obtained empirically by measuring transition times of capillaries cut to decreasing lengths, and at various flow speeds of the carrier liquid as shown schematically in Fig. 5. To produce this curve a capillary of a certain length was taken, e.g. 2,5 m and the times required for transition of that length at each of the different flow rates indicated was determined. Next, the capillary was shortened by 0.5 m and the measurements at each flow rate repeated. This procedure was continued until a capillary length of about 30 cm was reached where the measurements became irreproducible. Tables of travelled distances (by elution peaks) and the associated (transition) times were produced from this data. By transition time, is meant the time the leading flank of an elution peak takes to travel a capillary of given length. That leading flank is known to travel with the characteristic speed of Segré-Silberberg transport. The slope of the plot that shows the travelled distance (capillary length) versus time reflects that speed, at any flow rate of the carrier liquid. The Y axis is the distance travelled by the elution (= capillary length) and the X axis is time.

The slope of these curves, a measure of the speed of Segré-Silberberg transport, remains constant down to capillary lengths of about 30 cm, irrespective of the chemical nature of the capillary wall coatings. Experiments with capillaries shorter than that show transient flow regimes and some dependency on sample storage times (see fig. 1: storage column). The constancy of these speeds allows the position of the leading flank of the first peak in elution diagrams (see fig. 4) to be considered as a reference in measurements of the retardation of the second peak, as explained hereafter.

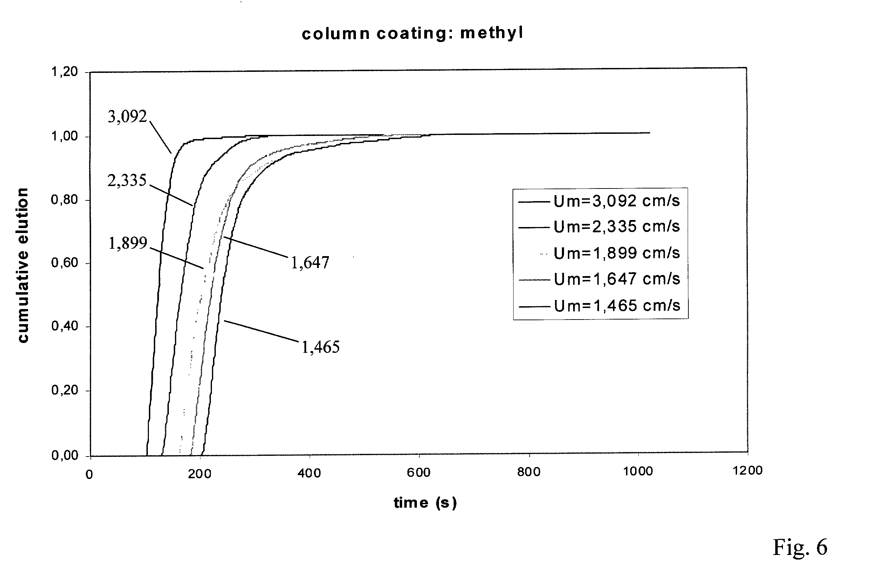

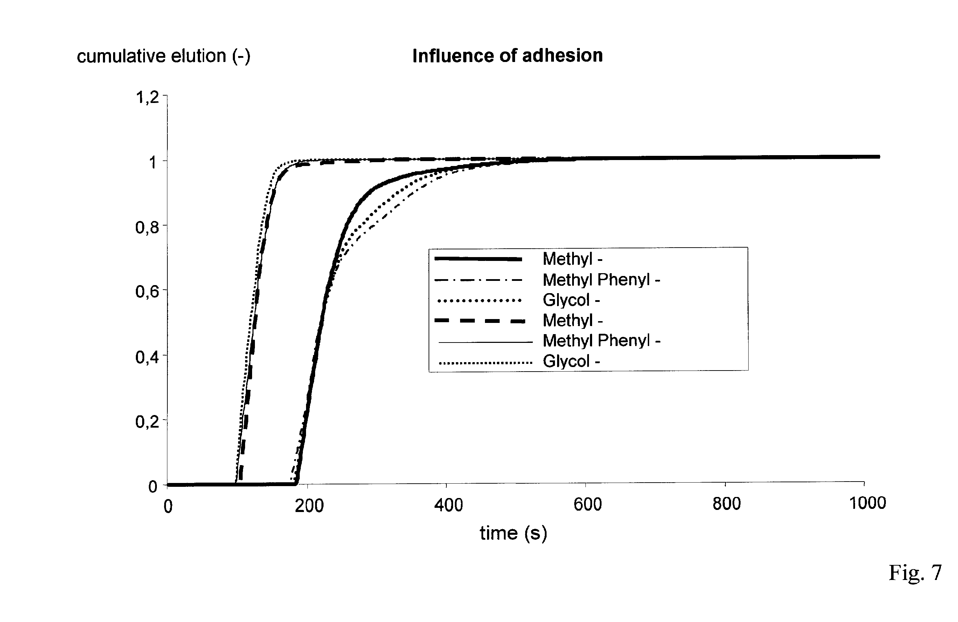

The apparent noise in elution diagrams is caused by statistical variations of the count rate. The interpretation of elution diagrams is greatly facilitated therefore by considering the cumulative elution (Figs. 6-8), rather than the differential one (see Fig. 4). Steep flanks of cumulative diagrams followed by a sharp knee indicate fast elution, and absence of adhesion. A broad knee region, on the contrary, reflects retarded elution as an effect of adhesion. This becomes more evident on comparing elution diagrams obtained at different flow speeds of the carrier liquid. As shown in Figs. 6 and 7, the knee is broader at the slower flow rates.

It should be noticed that elution at relatively high flow speeds of the carrier (Fig. 7, volume flow rates of 6.8 mm$^3$/sec.) does not show any retardation: the diagrams coincide, irrespective the chemical nature of the wall coatings. It is assumed that the reason is the absence of wall contacts. The Segré-Silberberg effect is fully developed and transport takes place at a radial distance about 45 % from the capillary axis. This is no longer the case at lower carrier speeds (Fig. 7, volume flow rates of 3.6 mm$^3$/sec.). Segré-Silberberg transport is disturbed by gravitation. Wall contacts are enabled. The degree of disturbance actually depends on particle or cell sizes and densities, which should be almost uniform in the present case. The retardation effectuated by the methyl-phenyl coating (Fig. 7) is clearly greater than by the glycol coating. In the elution curves of a methyl-coated capillary adhesion is almost absent as can be concluded on the basis of the initial steepness of the curves and the sharp knee. The diagrams for methyl may serve as a reference in comparative tests with other wall coatings.

The results indicate that the area enclosed between the reference curve (e.g. methyl-coating) and the ones obtained with other coatings may serve as a quantitative or qualitative measure of transport retardation and of adhesive interaction. The determination of the area enclosed between the reference curve and any other is greatly facilitated by the use of the multi-channel analyser 10 that allows storage and simultaneous display of multi-scaling data. The wanted area is readily obtained by a subtraction of integrals, operation done with digital accuracy.

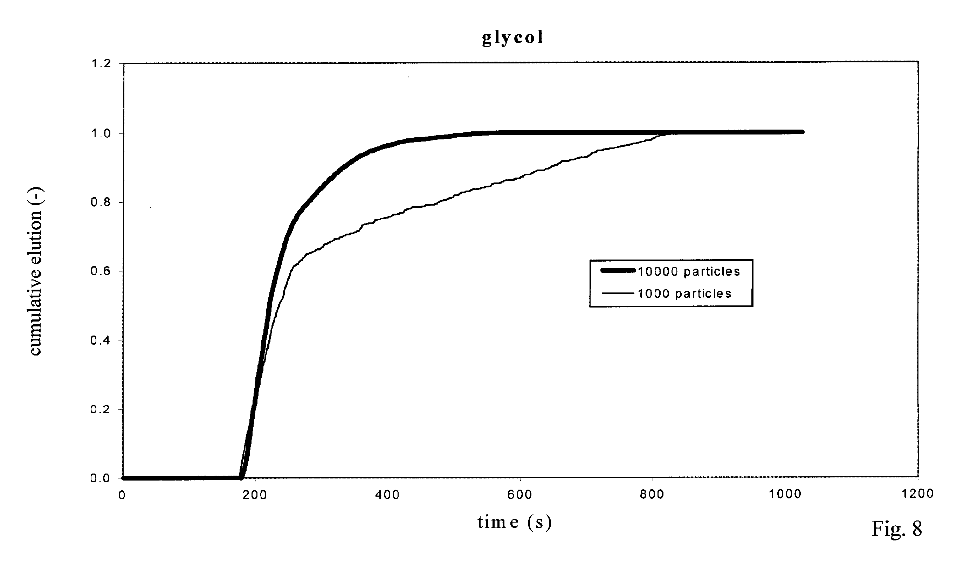

The reproducibility of these experiments, measured by the relative variation of the enclosed areas obtained upon repeated tests, is of the order of 2 % or better. An important parameter in that context appears to be the integral number of cells or particles involved in the experiments. The transport retardation markedly increases with decreasing cell or particle numbers as shown in Fig. 8. As an explanation, it should be noticed that the cross sectional area of the capillary tube where transport actively takes place remains very low. As a consequence of the Segré-Silberberg effect only a small proportion of the cross-section is involved in transport. Cell or particle number densities can be quite high. Mutual hindrance is most probably involved in the observed effect: cells or particles translating at a certain distance from the wall might push partners closer to the wall so as to decrease their retardation. Another cause might be a saturation of the accessible surface. It should be mentioned in this context that small sample fractions have been found involved in what may be called irreversible adhesion to the wall, an effect that causes progressively decreasing adhesion upon repeated experiments. Results like those shown in Fig. 8 indicate the importance of standardisation of the number of cells or particles used in each test. In particular the results of Fig. 8 may be interpreted as a chamber 7 having an "overload value", and that for repeatable tests the flow rates and particle concentrations should preferably be below the overload value. Suitable numbers in the case of 530 $\mu$m capillaries, may be in the order of 5000. On the other hand much lower numbers may degrade the reproducibility.

Tests with several different coatings other than the above ones have been carried out. Among these, polyurethanes, intended for use in artificial organs have been tested. The polymer, introduced in a dissolved state, is deposited at the inner surface of the capillary as a layer, about 2 $\mu$m thick, by evaporation of the solvent. Measurements with latex particles as a test material show a retardation that is almost the same as with methyl-phenyl coatings. Experiments have been performed with silica capillaries of 220 $\mu$m bore, methyl coated. The objective is to investigate the transport process in artificial kidneys. The capillaries are of the same bore as that of the semi-permeable membranes. Results show the occurrence of Segré-Silberberg transport, similar to the one in larger bore capillaries.

The lower limit of particle sizes in experiments that respond to the transport mechanism described is about 0,9 $\mu$m. Much smaller cells or particles appear increasingly subject to diffusion. The result is a less marked Segré-Silberberg transport. This size limit also corresponds to the detection limit of electronic gating, with gates of 30 $\mu$m aperture. Experiments with gates like that require precautions regarding working conditions, e.g. to prevent or monitor clogging of the gate caused by dust. Gates of smaller aperture are not commercially available, however this is not a limit on the present invention.

The largest commercial electronic gates are of 300 $\mu$m aperture, although this is not a limit on the present invention. Experiments with such gates and particles of tens of micrometer in diameter are suitable. The signal-to-noise ratio is excellent, due to low gate impedance. The detection limit (minimal diameter of spherical particles detected) as a rule remains about 3 % of the gate aperture.

It should be noticed that the adhesion/transport behaviour of different cells or particles can be investigated as well, in capillaries of given bore and wall coating. Various carrier liquids can be applied also.

The chamber 7 may be constructed from one or more tubes or capillaries or may comprise a column packed with coated material, e.g. beads. However, a capillary chamber is preferred as it is easier to analyse the results theoretically. Capillaries of the length 0,2 m up to 10 m or more can be successful. The upper limit to tube length is probably only fixed by pressure demands imposed to the pump system that must control the carrier flow.

With tubes shorter than 30 cm, poor reproducibility of elution diagrams may occur. This may find its origin in the lack of a transition from a plug-like distribution of sample materials, immediately after injection, to the one associated with Segre'-Silberberg transport, i. e. the transport on a preferential pathway half-way the axis and the capillary wall.

The injection of samples is preferably done by the use of a sampling valve 4 with storage column 5. With measurement chamber lengths in the order of 30 cm, the dimensions of the storage column 5 and settling that takes place inside mean that samples don't really behave as a plug. Storage times become important and are preferably kept as short as possible.

Fused silica columns with internal diameters of 100 µm, 115 µm, 220 µm... 530 µm and with various (internal) coatings are commercially available from SGE Inc.; Varian, Altech. Polymer coatings (e.g. poly-urethanes) are obtained by evaporation deposition from solutes.

The skilled person will appreciate that the methods of the present invention offer qualitative and quantitative evaluation of cell or particle adhesion at solid-liquid interfaces. The technique as a measurement method is sensitive, in the way that it reveals the slightest difference in adherence of the particles to the capillary wall coatings applied. The reproducibility is high, comparable to that of liquid chromatography. The technique, in addition to its application in adhesion measurements, also offers a cell or particle separation process. Discriminating parameters in that case may be at least one of size, density and adherence. Any applications that require a characterization/separation of cells or particles on the basis of cell/particle density, size or adherence are also included within the scope of the present invention. For example, the present invention may be used to evaluate the adherence of biomaterials as an alternative to the methods proposed in ISO 10993-4 norm (addendum 2). Further, any separation of cell populations into fractions of depending on at least one of different cell adherence, cell size and density is included within the scope of the present invention, e.g. in the fields of haematology, histology, cancerology, artificial organs or similar. For example, adhesion in 200 µm bore capillaries has been investigated, successfully. Capillaries of that bore are representative for the hollow fibres used in renal dialysers (artificial kidneys). Adhesion, related to the chemical nature of these fibres, is a point of actual interest. The present invention may also be used in the quality control of industrial processes, e. g. in the detection and discrimination of mastitis cells from somatic cells (not related to the occurrence of mastitis) in raw milk, greatly facilitated by the logarithmic scaling of cell size distributions. The present invention may also be used in comparative tests on adherence of dyes to various substrates. For example, the present invention may be used to investigate the colloidal stability of suspensions/emulsions in contact with solids. The following is a non-exhaustive list of materials which can be tested:

    biopolymers (poly-urethanes);
    membranes used in filtration processes;
    semi-permeable (hollow) fibres used in renal dialysers; milk and its derivatives;
    liquid foods for parenteral administration;
    pharmaceuticals (in emulsion/suspension).

While the invention has been shown and described with reference to preferred embodiments, it will be understood by those skilled in the art that various changes or modifications in form and detail may be made without departing from the scope and spirit of this invention. For example, the chamber 7 may be subject to electric or magnetic fields to modify the flow and adhesion of the particles. Similarly, the particles carry electric charge and the solid/liquid interface may be adapted to attract or repel these particles. For example, certain unwanted particles may be severely retarded by such means so that they do not contribute to the relevant part of the ellute.

## Claims

1. A qualitative or quantitative method of evaluating an adhesion characteristic between at least one set of particles dispersed in a liquid and a stationary phase, the stationary phase being provided on an inner surface of a chamber, comprising:

    passing the particles in the liquid through the chamber at a flow rate so that adhesion between the stationary phase and the particles retards elution, and
    measuring a value relating to the retardation of elution of the at least one set of particles as a measure of the adhesion characteristic.

2. A method of sorting one set of particles from another set of particles dispersed in a liquid using a stationary phase, the stationary phase being provided on an inner surface of a chamber, comprising:

    passing the particles in the liquid through the chamber at a flow rate so that adhesion between the stationary phase and the particles retards elution for at least one of the sets of particles, and
    selecting a sample of the particles depending on their degree of retardation.

3. The method of claim 1 or 2 wherein the flow rate of passing liquid through the chamber is lower than that required for Segré-Silberberg transport of at least one of the sets of particles.

4. The method according to any of claims 1 to 3, wherein the flow rate of passing liquid through the chamber is higher than required to allow partial sedimentation in the chamber and rolling of at least one of the sets of particles along the stationary phase to liquid interface.

5. The method of any of the claims 1 to 4 wherein the chamber is a capillary tube.

6. The method according to any of the claims 1 to 5, wherein the inner surface is a coating.

7. The method according to claim 6, wherein the coating is applied on an inner bore of a capillary tube.

8. The method according to any of the claims 1 to 7, wherein the particles are cells.

9. An apparatus for the qualitative or quantitative evaluation of an adhesion characteristic between at least one set of particles dispersed in a liquid and a stationary phase, comprising:

   a chamber with an inner surface having the stationary phase,
   a delivery device for supplying the particles in the liquid to the chamber at a flow rate so that adhesion between the stationary phase and the particles of the at least one set retards elution, and
   a measuring device for measuring a value relating to the retardation of elution as a measure of the adhesion characteristic.

10. An apparatus for sorting one set of particles from another set of particles dispersed in a liquid using a stationary phase:

    a chamber with an inner surface having the stationary phase,
    passing the particles in the liquid through the chamber at a flow rate so that adhesion between the stationary phase and the particles of at least one of the sets retards elution, and
    means for selecting a sample of the particles depending on their degree of retardation.

11. The apparatus of claim 9 or 10 wherein the chamber is a capillary tube.

12. The apparatus according to any of claims 9 to 11, wherein the inner surface is a coating.

13. The apparatus according to claim 12, wherein the coating is on an inner bore of the capillary tube.

14. The apparatus according to any of the claims 9 to 13, wherein the particles are cells.

Fig. 1

Fig. 2

EP 1 365 237 A1

Fig. 3

Fig. 4a

EP 1 365 237 A1

Fig. 4b

**capillary length / traveled distance (m)**

Fig. 5

EP 1 365 237 A1

EP 1 365 237 A1

**column coating: methyl**

Fig. 6

cumulative elution (-)      **Influence of adhesion**

Legend:
- Methyl -
- Methyl Phenyl -
- Glycol -
- Methyl -
- Methyl Phenyl -
- Glycol -

time (s)

Fig. 7

EP 1 365 237 A1

EP 1 365 237 A1

**glycol**

Fig. 8

Fig. 9

EP 1 365 237 A1

EP 1 365 237 A1

Fig. 10

**European Patent Office**

## EUROPEAN SEARCH REPORT

Application Number

EP 02 44 7093

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | F.R. DE BISSCHOP, J.L. EVERAERT: "Instrumental Method for Quantitative Evaluation of Cell/Particle Adhesion Based on Transport Measutrements in Capillary Flow Part I: The measuring system" IEEE INSTRUMENTATION AND MEASUREMENT TECHNOLOGY CONFERENCE, 21 - 23 May 2002, pages 1237-1241, XP002217543 Anchorage * the whole document * --- | 1-14 | G01N30/00 |
| X | F.R. DE BISSCHOP,S. ELOOT, M. DE METS, P. VERDONCK: "Instrumental Method for Quantitative Evaluation of Cell/Particle Adhesion Based on Transport Measurements in Capillary Flow Part II: Experimental Feasability Study" IEEE INSTRUMENTATION AND MEASUREMENT TECHNOLOGY CONFERENCE, 21 - 23 May 2002, pages 1243-1247, XP002217544 Anchorage * the whole document * --- | 1-14 | |
| | | | TECHNICAL FIELDS SEARCHED (Int.Cl.7) |
| | | | G01N B01D B03B |
| X | US 5 460 945 A (LAWRENCE MICHAEL ET AL) 24 October 1995 (1995-10-24) * column 17, line 1 - column 23, line 61 * --- | 1-14 | |
| A | US 5 039 426 A (GIDDINGS JOHN C) 13 August 1991 (1991-08-13) * column 4, line 10-13 * * column 5, line 41-61 * * column 8, line 11 - column 12, line 16 * --- | 1-14 | |
| A | US 6 365 050 B1 (CAUCHON GREGORY PAUL) 2 April 2002 (2002-04-02) * column 8, line 56-64 * --- | 1-14 | |

-/--

The present search report has been drawn up for all claims

| Place of search | Date of completion of the search | Examiner |
|---|---|---|
| MUNICH | 21 October 2002 | Müller, T |

## EUROPEAN SEARCH REPORT

| European Patent Office | | Application Number |
|---|---|---|
| | EUROPEAN SEARCH REPORT | EP 02 44 7093 |

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 162 449 A (UNIV GENT) 12 December 2001 (2001-12-12) * the whole document * ----- | 1-14 | |
| | | | **TECHNICAL FIELDS SEARCHED** (Int.Cl.7) |

The present search report has been drawn up for all claims

| Place of search | Date of completion of the search | Examiner |
|---|---|---|
| MUNICH | 21 October 2002 | Müller, T |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**  EP 02 44 7093

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2002

| Patent document cited in search report | | Publication date | Patent family member(s) | | Publication date |
|---|---|---|---|---|---|
| US 5460945 | A | 24-10-1995 | AU | 663324 B2 | 05-10-1995 |
| | | | CA | 2110292 A1 | 10-12-1992 |
| | | | EP | 0586596 A1 | 16-03-1994 |
| | | | IE | 921698 A1 | 02-12-1992 |
| | | | JP | 6508265 T | 22-09-1994 |
| | | | NZ | 242896 A | 28-05-1996 |
| | | | NZ | 264353 A | 28-05-1996 |
| | | | WO | 9221746 A1 | 10-12-1992 |
| | | | AU | 2177292 A | 08-01-1993 |
| | | | ZA | 9203953 A | 31-03-1993 |
| US 5039426 | A | 13-08-1991 | NONE | | |
| US 6365050 | B1 | 02-04-2002 | NONE | | |
| EP 1162449 | A | 12-12-2001 | EP | 1162449 A1 | 12-12-2001 |
| | | | AU | 6905501 A | 17-12-2001 |
| | | | WO | 0194914 A1 | 13-12-2001 |

EPO FORM P0459

For more details about this annex : see Official Journal of the European Patent Office, No. 12/82